# EUROPEAN PATENT SPECIFICATION

(11) **EP 1 565 356 B1**
(45) Date of publication and mention of the grant of the patent: **20.02.2008**
(21) Application number: 03811972.3
(22) Date of filing: 26.11.2003
(51) Int. Cl.: B60R 21/34

(54) **IMPROVEMENTS IN OR RELATING TO A SAFETY ARRANGEMENT**
VERBESSERUNGEN FÜR EINE SICHERHEITSANORDNUNG ODER DIESEBETREFFEND
AMELIORATIONS APPORTEES A UN MECANISME DE SECURITE

(30) Priority: 28.11.2002 GB 0227809
(43) Date of publication of application: 24.08.2005
(73) Proprietor: AUTOLIV DEVELOPMENT AB, 447 83 Vargarda (SE)
(72) Inventor: HAGLUND, Lennart, S-447 32 Vargarda (SE)
(74) Representative: Parry, Simon James
(86) International application number: PCT/SE2003/001823
(87) International publication number: WO 2004/048159

(56) References cited:
- EP-A1- 1 350 693
- WO-A2-02/09983
- DE-A1- 2 841 315
- DE-A1- 10 108 882
- DE-A1- 10 116 717

## Description

**THE PRESENT INVENTION** relates to a safety arrangement and more particularly relates to a safety arrangement provided in a motor vehicle adapted to lift the rear part of the hood or bonnet of the vehicle in response to an impact or accident situation involving a pedestrian.

It has been proposed to provide a safety arrangement adapted to raise the rear part of the hood or bonnet of the motor vehicle in the event that an accident should occur in which a pedestrian is involved. The reason for lifting the rear part of the hood or bonnet is that, with the rear part of the hood or bonnet lifted, the entire bonnet is spaced from the underlying engine. The hood or bonnet may thus deform, whilst decelerating the body or head of the pedestrian, thus giving the head or body of the pedestrian a relatively slow deceleration. If the hood or bonnet were not lifted, if the hood or bonnet deformed downwardly by even a short distance due to an impact with a pedestrian, that downward movement would soon terminate when the underside of the hood or bonnet impacted with the underlying engine, thus very rapidly decelerating the pedestrian with possibly fatal consequences.

Various proposals have been put forward as to mechanisms to achieve this objective, but it has been found difficult to provide a mechanism dimensioned to be located beneath the hood or bonnet, but which is capable of providing a sufficient degree of lift. The present invention seeks to provide an improved safety arrangement.

WO02/09983 which comprises the features mentionned in the preamble of claim 1, discloses an actuating device for movement of a vehicle body part into a position in which such part is relatively flexible to protect from injury a person with whom the vehicle is colliding. The actuating device comprises a piston and cylinder unit in which the piston and cylinder are urged apart by spring pressure but normally maintained in a contracted position by a retaining element which can be displaced by firing of an explosive charge to allow the actuating unit to extend.

DE-A-2841315 discloses an arrangement for lifting the rear end of the bonnet of a motor car in the event of collision with a pedestrian, which arrangement comprises an actuating unit including a piston moveable in a cylinder by firing a pyrotechnic device, the piston being connected pivotably with a piston rod in turn connected pivotably with the rear end of the bonnet.

DE10108882 discloses an arrangement for raising the rear end of a motor car bonnet in the event of a collision with a pedestrian in which arrangement an actuating unit is provided including a piston having a piston rod pivotally connected with the bonnet. A cylinder, receiving the piston, is pivotally connected with the vehicle body, the piston being moveable along the cylinder to lift the vehicle bonnet, against a spring bias, by firing a propellant cartridge connected with the cylinder.

DE-A-10116717 likewise discloses an arrangement for lifting the rear end of a motor vehicle bonnet, the arrangement again comprising a piston and cylinder unit pivotally connected with the vehicle body and with the bonnet and extendible by gas under pressure from a source of compressed gas or produced by firing a pyrotechnic device.

According to one aspect of this invention there is provided a lifting arrangement for lifting a rear part of a hood or bonnet of a vehicle, the arrangement including a lifting unit comprising a plurality of elements, at least a first said element being mounted on a support and a second said element being connected with said rear part of said hood or bonnet, at least said second element being moveable relative to said first element along a predetermined axis of said first element, to lift said rear part of said hood or bonnet, characterised in that said first element has an abutment face and is mounted with said abutment face engaging a resilient element mounted on said support, the resilient element being configured to be deformed as the second element is moved relative to the first element to lift said part of said hood or bonnet, thereby permitting the entire lifting unit to lift relative to said support to facilitate imparting a virtual pivoting movement to the rear part of said hood or bonnet.

Preferably said first element comprises a cylinder and said second element comprises a piston having a piston head slideable in the cylinder and a part extending from the cylinder, said first element having, at its lower end, an outwardly directed mounting flange providing said abutment face, the flange resting on top of a resilient ring resting in turn on said support and constituting said resilient element, the flange being held in position by means of a retainer ring which has an inwardly directed lip which extends inwardly over the flange.

Advantageously said first element comprises a housing defining a chamber to receive a gas generator, the upper part of said housing supporting a hollow guide cylinder with a gas outlet port at its upper end, said first element further comprising a hollow outer cylindrical guide providing said cylinder within which said piston is moveable, the lowermost end of the cylindrical guide being secured to said housing, said piston being hollow to receive said hollow guide cylinder in a contracted condition of the unit and the lowermost end of the piston being provided with said piston head sealingly engaging the outer cylinder, wherein an outer part of the inner guide sleeve defines a groove and an inner part of the cylindrical piston defines a groove, the grooves being co-aligned when the piston is an initial condition relative to the guide cylinder, there being a releasable element contained within the co-aligned grooves to retain the piston in the initial condition.

Advantageously the piston is provided with a mounting lug provided with an aperture to receive a pivot pin.

In order that the invention may be more readily understood, and so that further features thereof may be appreciated, the invention will now be described, by way of example, with reference to the accompanying drawings in which:
FIGURE 1 is a sectional view of a lifting unit prior to deployment;
FIGURE 2 is a view of the lifting unit of Figure 1 following deployment;
FIGURE 3 is an enlarged perspective view of components of the embodiment of Figures 1 and 2; and
FIGURE 4 is a side elevational and part sectional view of a lifting arrangement embodying the invention.

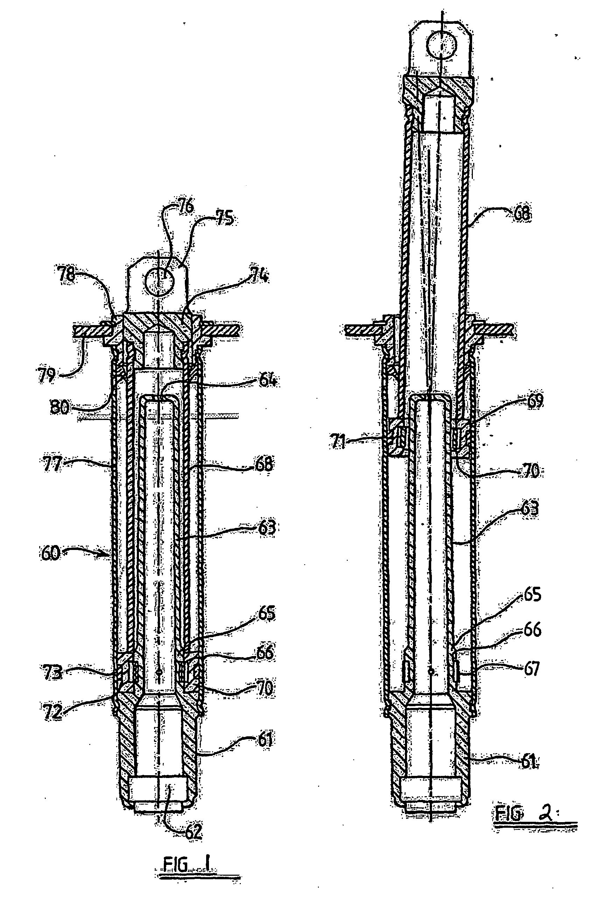

Figures 1 and 2 illustrate a lifting unit similar to one which may be used in an embodiment of the invention, in which the lifting unit is mounted in position beneath the rear part of the hood or bonnet of a motor vehicle. Figure 1 illustrates a lifting unit 60 in its initial condition. The lifting unit 60 incorporates a housing 61 defining a chamber 62 to receive a gas generator. The upper part of the housing 61 supports an inner hollow guide cylinder 63. The upper end of the guide cylinder 63 defines a gas outlet port 64. The base of the guide cylinder 63 is provided with a thickened region 65, adjacent the housing 61. An annular peripheral groove 66 is provided formed in the thickened region 65. The groove 66 contains a "C" clip 67.

A hollow cylindrical piston 68 is provided which is engaged telescopically with the guide cylinder 63. The lowermost end of the cylindrical piston 68 is provided with a piston head 69. The piston head 69 is provided with an inner annular groove 70 of a form corresponding to that of the annular groove 66 formed in the thickened base region 65 of the hollow inner cylindrical guide 63. Contained within the groove is a resilient annular ring 71.

The annular piston head 69 is also provided with a peripheral groove 72 provided in its radially outermost face, the peripheral groove 72 containing a sealing ring 73.

The upper end of the cylindrical piston 68 is provided with a plug 74. The plug 74 is provided, at its outer end, with an upstanding lug 75. The lug 75 defines a through-bore 76 dimensioned to receive a pivot pin. Part of the hood or bonnet may be pivotally mounted on the pivot pin.

The housing 61 carries a hollow cylindrical outer guide sleeve 77. The lowermost end of the guide sleeve 77 is crimped to the housing 61. The piston head 69 of the cylindrical piston 68 is a sliding sealing fit within the guide sleeve 77. The upper end of the guide sleeve 77 is crimped to a annular mounting ring 78. The mounting ring 78 may be used to mount the lifting unit 60 to an aperture formed in a support plate 79 forming part of the vehicle. A wiper seal 80 may be provided at the upper end of the guide sleeve 77, adjacent the mounting ring 78, the wiper seal 80 engaging the outer surface of the cylindrical piston 68.

It is to be appreciated that with the cylindrical piston 68 in an initial position, as shown in Figure 1, the combination of the "C" clip 67 and the annular ring 71 in the co-aligned annular grooves 66 in a thickened portion 65 at the base of the inner cylindrical guide 63 and 70 formed in the inner face of the piston head 69, serve to retain the cylindrical piston 68 firmly in an initial position. Thus the apertured lug 75 can provide a firm pivot point for the rear part of the hood or bonnet.

On actuation of the lifting unit, gas is supplied from the gas generator through the hollow cylindrical guide 63 to the interior of the cylindrical piston. The cylindrical piston 68 thus moves axially, lifting the lug 75.

When the cylindrical piston 68 has been lifted it is possible for the axis of the cylindrical piston 68 to deviate from the axis of the cylindrical guide 63 and also the cylindrical sleeve 77. This enables a hood or bonnet to effect a virtual pivoting motion about a front fastening catch.

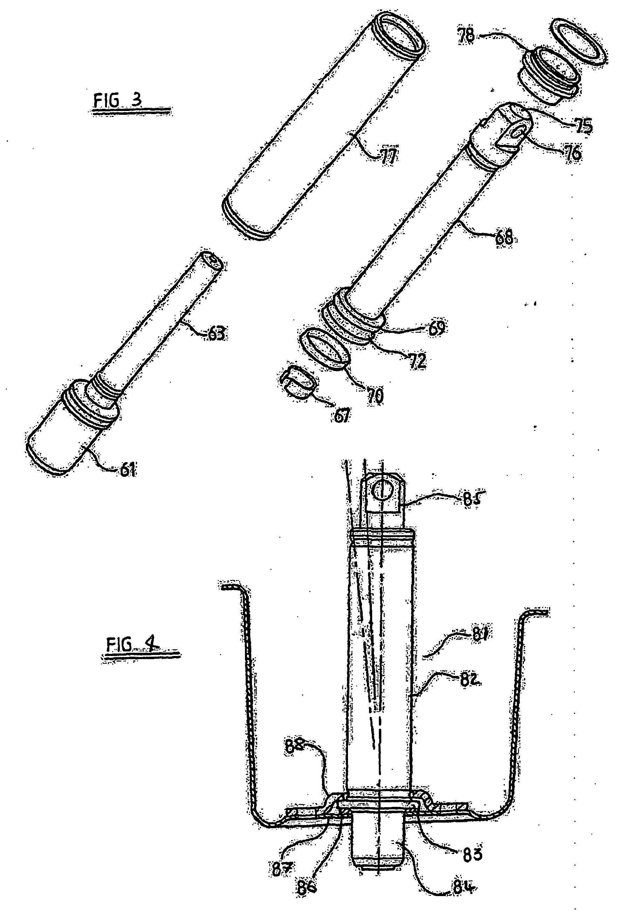

Figure 4 illustrates an embodiment of the invention in which a lifting unit 81 which may be a lifting unit having the same internal design as that of the lifting unit 60 of Figures 1 to 3 is mounted in position so that the entire lifting unit may tilt or pivot from an initial vertical position. Lifting unit 81 is provided with an outer cylindrical guide 82, and carries, at its lower end, an outwardly directed mounting flange 83. Beneath the mounting flange 83 a housing 84 is provided to contain a gas generator.

The upper end of the lifting unit is provided with an apertured lug 85.

The flange 83 rests on top of an annular resilient ring 86 resting on a support 87 and is held in position by means of an annular retainer ring 88 which has an inwardly directed lip which extends inwardly over the flange 83. It is to be appreciated that the lifting unit 81 may effect a tilting or pivoting movement about an initial upright position, so that the unit deviates from its initial position with part of the resilient ring 86 beneath the flange 83 being consequently compressed. This again facilitates a virtual pivoting movement of the hood or bonnet being lifted by the lifting unit.

In the present specification "comprises" means "includes or consists of" and "comprising" means "including or consisting of".

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A lifting arrangement for lifting a rear part of a hood or bonnet of a vehicle, the arrangement including a lifting unit (81) comprising a plurality of elements, at least a first said element (82) being mounted on a support (87) and a second said element (68) being connected with said rear part of said hood or bonnet, at least said second element (68) being moveable relative to said first element (82) along a predetermined axis of said first element, to lift said rear part of said hood or bonnet, **characterised in that** said first element has an abutment face (83) and is mounted with said abutment face engaging a resilient element (86) mounted on said support (87), the resilient element being configured to be deformed as the second element (68) is moved relative to the first element (81) to lift said part of said hood or bonnet, thereby permitting the entire lifting unit to tilt relative to said support to facilitate imparting a virtual pivoting movement to the rear part of said hood or bonnet.

2. A lifting arrangement according to Claim 1 wherein said first element comprises a cylinder (82) and said second element comprises a piston (68) having a piston head (69) slideable in the cylinder (82) and a part extending from the cylinder, said first element having, at its lower end, an outwardly directed mounting flange (83) providing said abutment face, the flange resting on top of a resilient ring (86) resting in turn on said support (87) and constituting said resilient element, the flange (83) being held in position by means of a retainer ring (88) which has an inwardly directed lip which extends inwardly over the flange (83).

3. A lifting arrangement according to Claim 2 wherein said first element comprises a housing defining a chamber (62) to receive a gas generator, the upper part of said housing supporting a hollow guide cylinder with a gas outlet port (64) at its upper end, said first element further comprising a hollow outer cylindrical guide (82) providing said cylinder within which said piston (68) is moveable, the lowermost end of the cylindrical guide (82) being secured to said housing (61), said piston (68) being hollow to receive said hollow guide cylinder (63) in a contracted condition of the unit and the lowermost end of the piston being provided with said piston head (69) sealingly engaging the outer cylinder (82), wherein an outer part of said hollow guide cylinder (63) provides a groove (66) and an inner part of the piston (68) provides a groove (70), the grooves being co-aligned when the piston (68) is in an initial condition relative to the guide cylinder (63), there being a releasable element (67) contained within the co-aligned grooves (66, 70) to retain the piston in said initial condition.

4. A lifting unit according to any of Claims 2 to 3 wherein the piston is provided with a mounting lug (85) provided with an aperture to receive a pivot pin.

## Patentansprüche

1. Hubanordnung zum Anheben eines hinteren Teils einer Motorhaube eines Fahrzeugs, wobei die Anordnung eine Hubeinheit (81) mit einer Mehrzahl von Elementen aufweist, wovon mindestens ein erstes der Elemente (82) auf eine Auflage (87) montiert ist und ein zweites der Elemente (68) mit dem hinteren Ende der Motorhaube verbunden ist, wovon mindestens das zweite Element (68) relativ zum ersten Element (82) entlang einer vorbestimmten Achse des ersten Elements beweglich ist, um das hintere Ende der Motorhaube anzuheben, **dadurch gekennzeichnet, dass** das erste Element eine mit einem auf die Auflage (87) montierten elastischen Element (86) in Eingriff stehende Stoßfläche (83) besitzt, wobei das elastische Element so konfiguriert ist, dass es sich bei Bewegung des zweiten Elements (68) relativ zum ersten Element (81) verformt, um den Teil der Motorhaube anzuheben und dadurch der gesamten Hubeinheit ein Kippen relativ zur Auflage zu ermöglichen, um so dem hinteren Ende der Motorhaube eine virtuelle drehende Bewegung zu verleihen.

2. Hubanordnung nach Anspruch 1, bei welcher das erste Element einen Zylinder (82) umfasst und das zweite Element einen Kolben (68) mit einem im Zylinder gleitenden Kolbenkopf (69) und ein sich vom Zylinder (82) erstreckendes Teil umfasst, wobei das erste Element an seinem unteren Ende einen nach außen gerichteten Montageflansch (83) aufweist, der die Stoßfläche bereitstellt, wobei der Flansch oben auf einem elastischen Ring (86) ruht, der wiederum auf der Auflage (87) ruht und das elastische Element darstellt, wobei der Flansch (83) durch einen Haltering (88) in Position gehalten wird, der eine nach innen gerichtete, sich nach innen über den Flansch (83) erstreckende Lippe aufweist.

3. Hubanordnung nach Anspruch 2, bei welcher das erste Element ein Gehäuse mit einer Kammer (62) zur Aufnahme eines Gasgenerators umfasst, wobei der obere Teil des Gehäuses einen hohlen Führungszylinder mit einer Gasauslassöffnung (64) an seinem oberen Ende stützt, wobei das erste Element ferner eine hohle äußere Zylinderführung (82) umfasst, die den Zylinder, worin der Kolben (68) beweglich ist, bereitstellt, wobei das unterste Ende der Zylinderführung (82) an dem Gehäuse (61) befestigt ist, der Kolben (68) hohl ist zur Aufnahme des hohlen Führungszylinders (63) in einem verkürzten Zustand der Einheit und das unterste Ende des Kolbens mit dem in dichtendem Eingriff mit dem äußeren Zylinder (82) stehenden Kolbenkopf (69) versehen ist, und bei welcher ein äußerer Teil des hohlen Führungszylinders (63) eine Nut (66) bereitstellt und ein innerer Teil des Kolbens (68) eine Nut (70) bereitstellt und die Nuten aneinander ausgerichtet sind, wenn sich der Kolben (68) in einer Ausgangsposition relativ zum Führungszylinder (63) befindet, wobei ein ablösbares Element (67) vorhanden ist, das in den aneinander ausgerichteten Nuten (66, 70) enthalten ist, um den Kolben im Ausgangszustand zu halten.

4. Hubanordnung nach einem der vorhergehenden Ansprüche 2 bis 3, bei welcher der Kolben mit einer Montageöse (85), die mit einer Öffnung zur Aufnahme eines Drehzapfens versehen ist, bereitgestellt ist.

## Revendications

1. Dispositif de levage permettant de soulever une partie arrière d'un capot d'un véhicule, le dispositif comportant une unité de levage (81) comprenant une pluralité d'éléments, au moins un premier dit élément (82) étant monté sur un support (87) et un deuxième dit élément (68) étant relié à ladite partie arrière dudit capot, au moins ledit deuxième élément (68) étant mobile par rapport au dit premier élément (82) le long d'un axe prédéterminé dudit premier élément, pour soulever ladite partie arrière dudit capot, **caractérisé en ce que** ledit premier élément présente une face de butée (83) et est monté avec ladite face de butée engageant un élément élastique (86) monté sur ledit support (87), l'élément élastique étant configuré pour être déformé lorsque le deuxième élément (68) se déplace par rapport au premier élément (81) pour soulever ladite partie dudit capot, permettant ainsi d'incliner toute l'unité de levage par rapport au dit support pour faciliter la transmission d'un mouvement de pivotement virtuel à la partie arrière dudit capot.

2. Dispositif de levage selon la revendication 1, dans lequel ledit premier élément comprend un cylindre (82) et ledit deuxième élément comprend un piston (68) ayant une tête de piston (69) pouvant coulisser dans le cylindre (82) et une partie s'étendant depuis le cylindre, ledit premier élément ayant, au niveau de son extrémité inférieure, une bride de montage (83) dirigée vers l'extérieur fournissant ladite face de butée, la bride reposant sur la partie supérieure d'un anneau élastique (86) reposant à son tour sur ledit support (87) et constituant ledit élément élastique, la bride (83) étant maintenue en position au moyen d'un anneau de retenue (88) qui présente une lèvre dirigée vers l'intérieur qui s'étend vers l'intérieur au-dessus de la bride (83).

3. Dispositif de levage selon la revendication 2, dans lequel ledit premier élément comprend un logement définissant une chambre (62) servant à recevoir un générateur de gaz, la partie supérieure dudit logement supportant un cylindre guide creux avec un orifice de sortie de gaz (64) au niveau de son extrémité supérieure, ledit premier élément comprenant en outre un guide cylindrique extérieur creux (82) fournissant ledit cylindre à l'intérieur duquel peut se déplacer ledit piston (68), l'extrémité inférieure du guide cylindrique (82) étant fixée au dit logement (61), ledit piston (68) étant creux pour recevoir ledit cylindre guide creux (63) dans un état contracté de l'unité et l'extrémité inférieure du piston étant munie de ladite tête de piston (69) engageant le cylindre extérieur (82) de manière étanche, dans lequel une partie extérieure dudit cylindre guide creux (63) fournit une rainure (66) et une partie intérieure du piston (68) fournit une rainure (70), les rainures étant co-alignées lorsque le piston (68) se trouve dans une position initiale par rapport au cylindre guide (63), un élément pouvant être libéré (67) étant contenu dans les rainures co-alignées (66, 70) pour retenir le piston dans ladite position initiale.

4. Unité de levage selon l'une quelconque des revendications 2 à 3, dans lequel le piston est équipé d'une languette de montage (85) munie d'une ouverture pour recevoir un pivot.
